# EUROPEAN PATENT APPLICATION

(11) **EP 1 813 359 A2**
(43) Date of publication of application: **01.08.2007**
(21) Application number: 07000284.5
(22) Date of filing: 08.01.2007
(51) Int. Cl.: B09B 3/00, B01J 19/08

(54) **Organic material decomposition and treatment apparatus using magnetic force**

(30) Priority: 31.01.2006 KR 20060009381; 18.12.2006 KR 20060129419
(71) Applicant: Park, Young Ho, Ridge NJ 07656 (US)
(72) Inventor: Park, Young Ho, Ridge NJ 07656 (US)
(74) Representative: Sawodny, Michael-Wolfgang

(57) **Abstract**

An organic material decomposition and treatment apparatus (1) using a magnetic force is disclosed, in which an organic material is decomposed without producing a harmful material when a petroleum industry organic material and a life waste of an organic material are decomposed and treated. The organic material decomposition and treatment apparatus (1) using a magnetic force comprises a body (100); a first inlet (200) which is formed at one upper side of the body and has a lid (220) which is opened and closed; a discharge port (400) which is formed at a front side of the body and has a lid (420) which is opened and closed; an exhaust pipe (500) which is installed at a back surface of the body; and magnetic force generators (600) which are installed opposite to each other at one side and the other side of the body, whereby the organic material is decomposed and treated by magnetic forces which are generated from the magnetic force generator (600) and are guided toward the interior of the body.

## Description

### BACKGROUND OF THE INVENTION

### 1. Field of the Invention

The present invention relates to an organic material decomposition and treatment apparatus, and in particular to an organic material decomposition and treatment apparatus using a magnetic force in which an organic material is decomposed without producing a harmful material when a petroleum industry organic material and a life waste of an organic material are decomposed and treated.

### 2. Description of the Background Art

The use of a disposable type product or a packing material recently increases, so that a lot of organic material waste is produced for thereby devastating the environments, As a life standard is enhanced, and the industry is advanced, the amount of waste increases more and more, and the kinds of the wastes are diversified. However, the amount of the wastes does not decrease despite of the government regulations.

The organic materials have been treated by a burying method, a burning method or a recycling method. Among the above methods, in Korea, the burying method is most used. The burying method has been preferably used in Korea as well as US, but it is impossible to recycle the wastes. In a certain nation such as Korea having a small area, the burying method may not be used permanently.

In order to resolve the above problems, on January 2005 the Korean government ordered not to bury food wastes except for the remnants produced after the wastes are burned or composted since January 2005. The organic materials may be treated only by the burning and recycling methods,

However, the recycling method has a poor result in view of economy. In addition, a secondary pollutant may be produced during the recycling process, by which the advantages of the recycling method may decrease.

In the case of the burning method, a lot of harmful materials such as dioxin, hydrogen chloride, chlorine, hydrogen fluorine, heavy metals, carbon monoxide, nitric compounds, sulfate compounds, etc. may be produced due to an imperfect combustion and may become a factor for destroying environments and increasing earth warming phenomenon. So, in order to satisfy the discharge level in compliance with the environment standard, a complicated and expensive dust collection facility or a high temperature combustion apparatus may be installed, so that the total cost increases, and it is not easy to actually apply to the industry.

### SUMMARY OF THE INVENTION

Accordingly, it is an object of the present invention to provide an organic material decomposition and treatment apparatus using a magnetic force in which an organic material may be efficiently decomposed without a harmful material is produced or discharged.

It is another object of the present invention to provide an organic material decomposition and treatment apparatus using a magnetic force in which it is possible to make the smoke generated during a decomposition of an organic material non-harmful by preventing the same form being discharged to the outside.

To achieve the above objects, there is provided an organic material decomposition and treatment apparatus using a magnetic force which comprises a body; a first inlet which is formed at one upper side of the body and has a lid which is opened and closed; a discharge port which is formed at a front side of the body and has a lid which is opened and closed; an exhaust pipe which is installed at a back surface of the body; and magnetic force generators which are installed opposite to each other at one side and the other side of the body, whereby the organic material is decomposed and treated by magnetic forces which are generated from the magnetic force generator and are guided toward the interior of the body.

There is further provided a first inner casing which is installed in the interior of the body stores the organic material.

There are further provided a second inlet which is protruded over a certain size opening formed at the lid of the first inlet and has a lid which is installed at an upper side and is opened and closed, and a second inner casing which is rotatably installed in the interior of the second inlet, whereby the organic material is stored in the second inner casing, and as the second inner casing is rotated, the organic material is inputted into the interior of the body.

The second inner casing has an arc side surface and Is fixedly engaged with a rotation lever which passes through the lateral side of the second inlet.

A filter is installed at an outer side of the exhaust pipe.

There are further provided a magnetic force guide pipe installed between the body and the magnetic force generator, and a magnetic force generated by the magnetic force generator is guided toward the interior of the body through the magnetic force guide pipe, and a magnetic force intensity control valve is installed at the magnetic force guide pipe.

The magnetic force generator comprises an upper casing and a lower casing which are engaged with each other, and a magnet receiving part is formed at a center portion of each upper and lower casings, and a semicircular opening having a threaded groove is formed at one side of the same, and the magnetic force guide pipe is thread-engaged with the opening.

There is further provided a protection cover which is installed at both outer sides of the body so that the magnetic force generated by the magnetic force generator is prevented from being discharged to the outside.

To achieve the above objects, there is provided an organic material decomposition and treatment apparatus using a magnetic force which comprises a body; a first inlet which is formed at one upper side of the body and has a lid which is opened and closed; a first inner casing which is installed in the interior of the body for storing an organic material; a discharge port which is formed at a front side of the body has a lid which is opened and closed; a dust collection unit which is installed at a back surface of the body; and magnetic force generators which are installed opposite to each other at one side and the other side of the body, whereby the organic material is decomposed and treated by magnetic forces which are generated from the magnetic force generator and are guided toward the interior of the body,

The dust collection unit comprises a dust collection casing which is attached to a back surface of the body; a smoke suction port which passes through the attachment surfaces of the body and the dust collection casing; a smoke discharge port which is engaged at the dust collection casing; a water tank which is attached to an outer side of the dust collection casing; a water pump which is attached at a lower side of the dust collection casing and is connected with the water tank through a connection pipe; and a water spray port which is protruded from an upper side of the water pump and has an end which passes through one side surface of the dust collection casing and is inserted into the interior, whereby the smoke occurring during the decomposition of the organic material in the interior of the body is inputted into the dust collection casing through the smoke suction port and is liquefied by water sprayed by the water spray port.

The smoke discharge port comprises a first smoke discharge port which is inserted into the interior of the dust collection casing, and a second smoke discharge port of which one side is joined the first smoke discharge port and the other side is externally protruded from the dust collection casing.

An end of the first smoke discharge port and the water spray port are opposite to each other at the same heights.

A certain size opening is formed at the attachment surfaces of the dust collection casing and the water tank for allowing water to flow, and a filter is installed at the opening.

An inlet is installed at an upper side of the water tank, and a drainage port is installed at the lower side of the same.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view illustrating an organic material decomposition and treatment apparatus using a magnetic force according to an embodiment of the present invention;
Figure 2 is a perspective view illustrating an inner construction of an organic material decomposition and treatment apparatus using a magnetic force of Figure 1;
Figure 3 is a perspective view illustrating an organic material decomposition and treatment apparatus using a magnetic force according to another embodiment of the present invention;
Figure 4 is a perspective view illustrating an inner construction of a second inlet of an organic material decomposition and treatment apparatus using a magnetic force of Figure 3;
Figure 5 is a plane view illustrating an organic material decomposition and treatment apparatus using a magnetic force of Figure 3;
Figure 6 is a rear view illustrating an organic material decomposition and treatment apparatus using a magnetic force of Figure 3;
Figure 7 Is a perspective view illustrating an organic material decomposition and treatment apparatus using a magnetic force according to further another embodiment of the present invention;
Figure 8 is a perspective view illustrating a magnetic force generator of an organic material decomposition and treatment apparatus using a magnetic force according to the present invention;

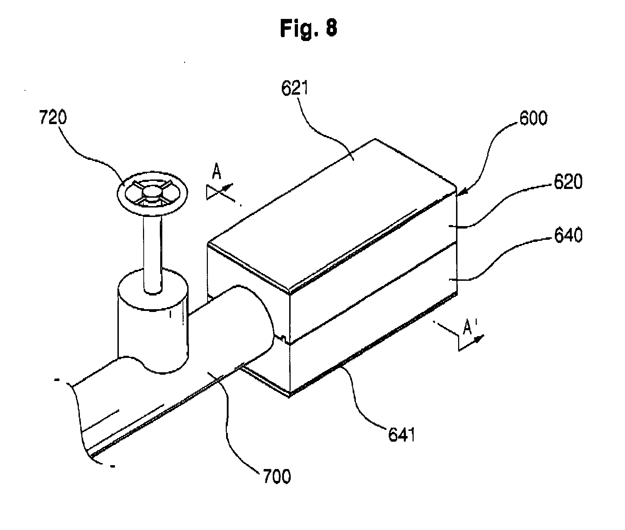

Figure 8 is a disassembled view illustrating a magnetic force generator of Figure 8;

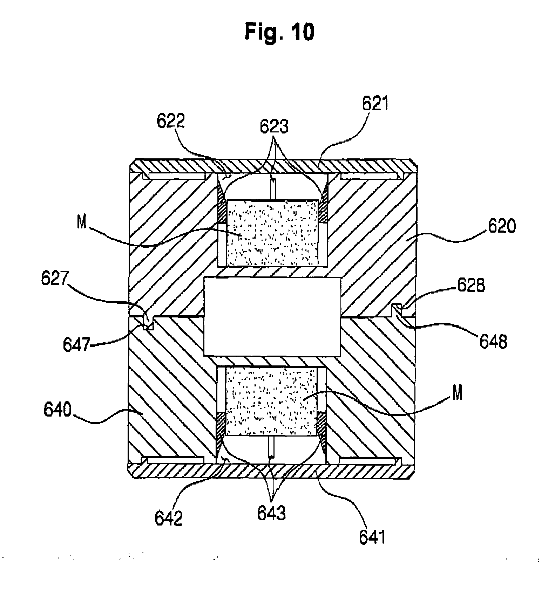

Figure 10 is a cross sectional view taken along line A-A' of Figure 8;

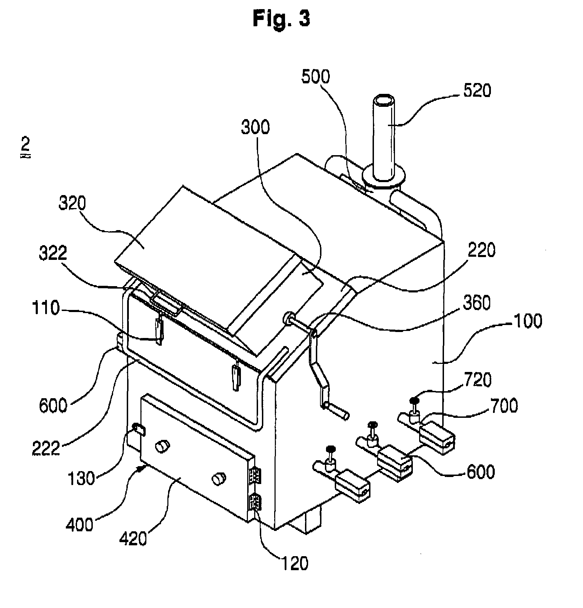

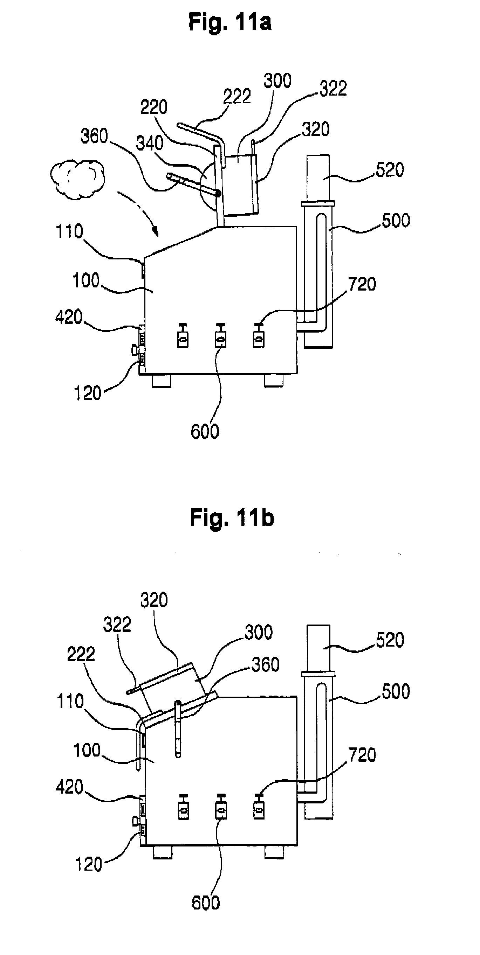

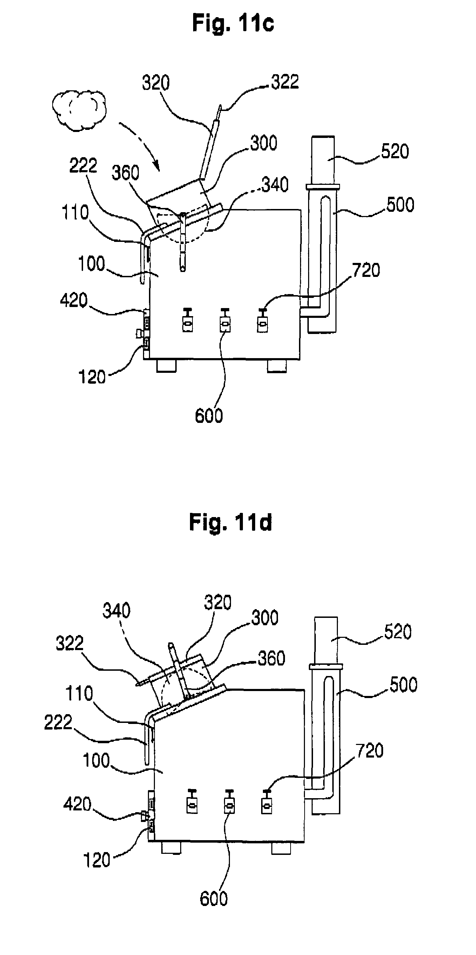

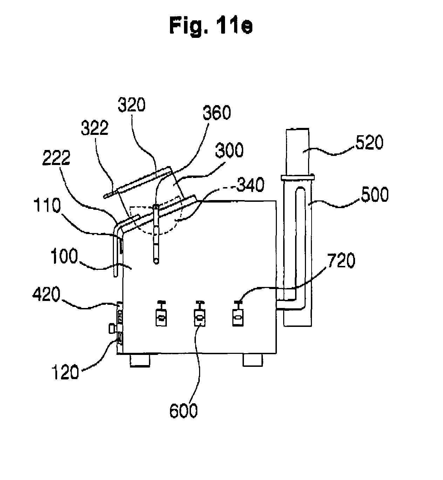

Figures 11A through 11E are schematic views illustrating a use state of an organic material decomposition and treatment apparatus using a magnetic force of Figure 3;

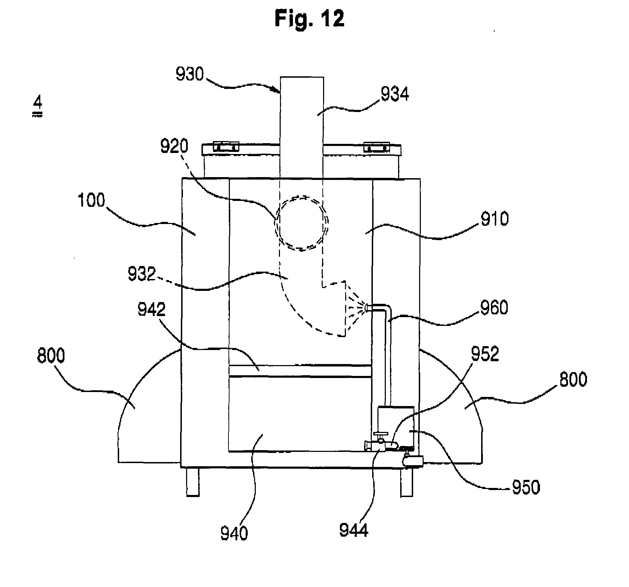

Figure 12 is a rear view illustrating an organic material decomposition and treatment apparatus using a magnetic force according to further another embodiment of the present invention:

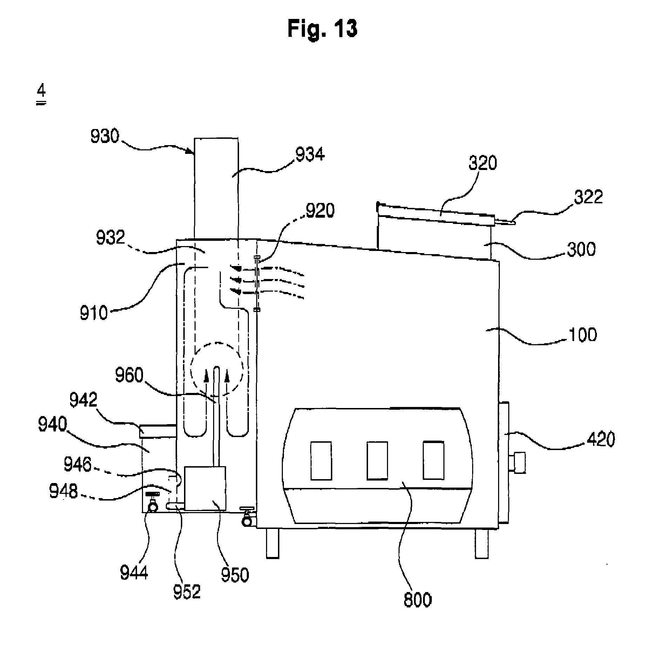

Figure 13 is a lateral view illustrating an organic material decomposition and treatment apparatus using a magnetic force of Figure 12;

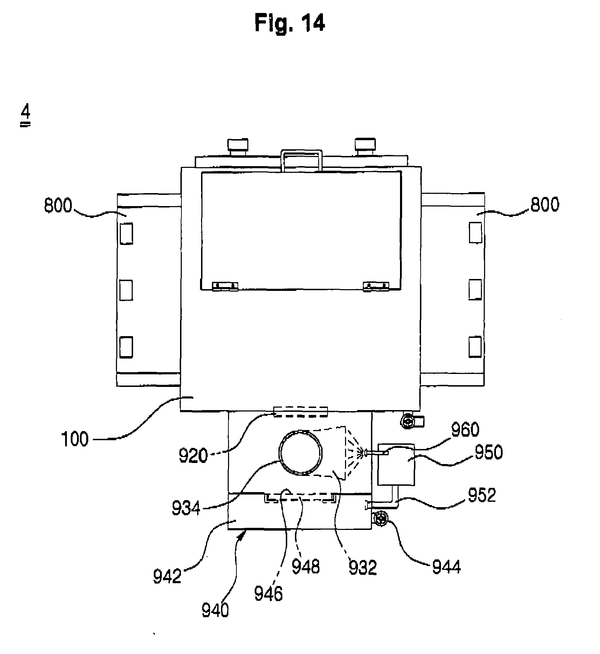

Figure 14 is a plane view illustrating an organic material decomposition and treatment apparatus using a magnetic force of Figure 12; and

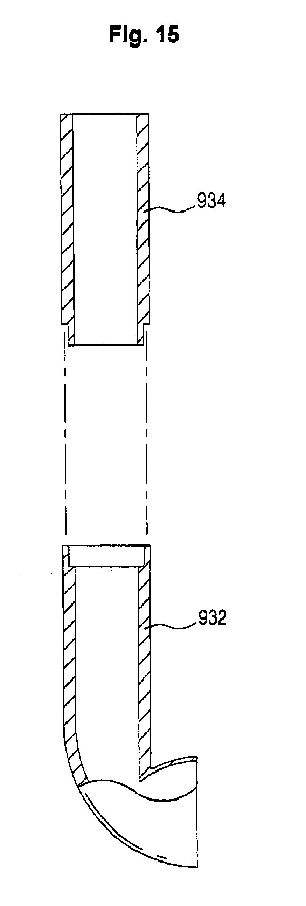

Figure 15 is a disassembled view illustrating a smoke discharge port of an organic material decomposition and treatment apparatus using a magnetic force of Figure 12.

### DETAILED DESCRIPTION OF THE PREFERRED EMBODIMENTS

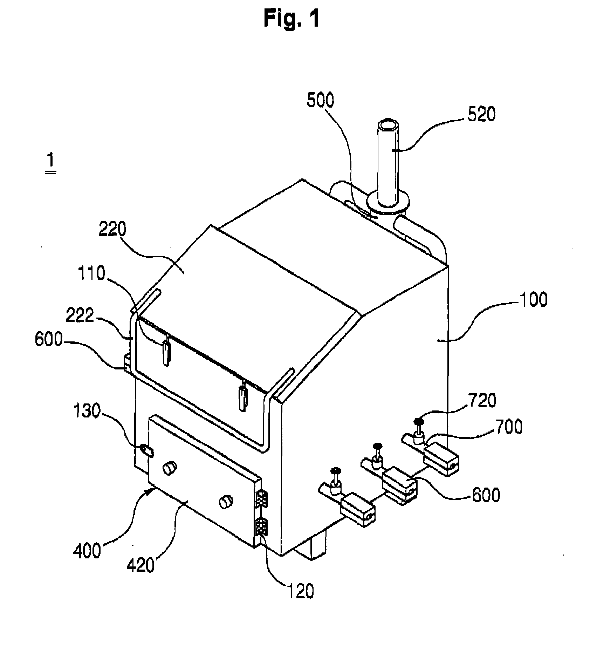

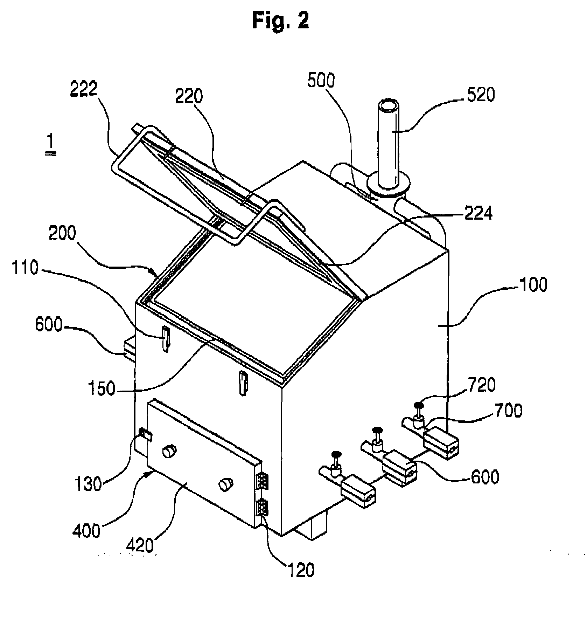

Figure 1 is a perspective view illustrating an organic material decomposition and treatment apparatus using a magnetic force according to an embodiment of the present invention, and Figure 2 is a perspective view illustrating an inner construction of an organic material decomposition and treatment apparatus using a magnetic force of Figure 1.

As shown in Figures 1 and 2, the organic material decomposition and treatment apparatus 1 according to the present invention comprises a body 100, a first inlet 200, a discharge port 400, an exhaust pipe 500, and a magnetic force generator 600.

The body 100 may be formed in a rectangular shape or a square shape and may be formed in various shapes, while having a certain inner space for inputting an organic material and performing a decomposition work therein. The body 100 is preferably formed of a double-sheet steel plate. With the above construction, it is possible to prevent the heat generated during the decomposition of the organic material from being discharged, and an external air is prevented from being inputted into the interior. A first inner casing 150 is preferably installed in the interior of the body 100 for inputting an organic material. The first inner casing 150 is preferably made of a steel plate.

The first inlet 200 is formed at an upper side of the body 100 and is preferably inclined at a certain angle for easily inputting the organic material. A lid 220 is installed at the first inlet 200 so that the body 100 is sealed, The lid 220 is opened and closed so that one side of the same is hinged (not shown) at an upper surface of the body 100, the other side of the same being engaged at a front side of the body 100 by a locking apparatus 110. The lid 220 has a certain size larger than that of the first inlet 200, and a protrusion is preferably formed at a lower surface of the same so that it is inserted into an inner surface of the opened portion of the first inlet 200. With the above construction, the body 100 is reliably sealed. A handle 222 is installed at an outer side of the lid 220 for allowing the lid 220 to be easily opened and closed.

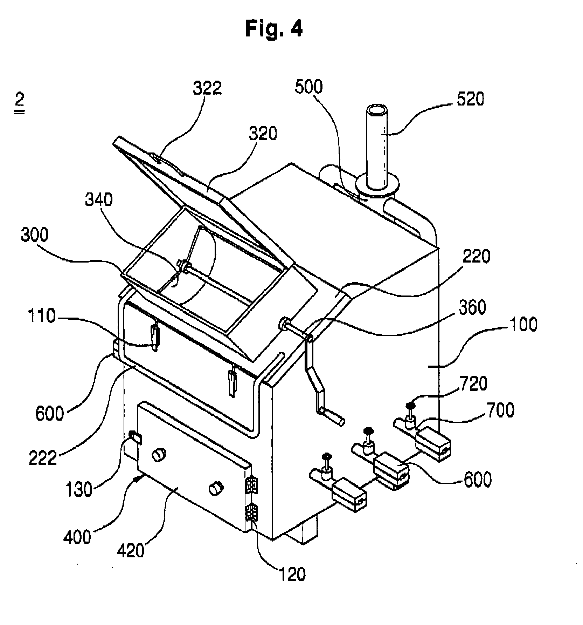

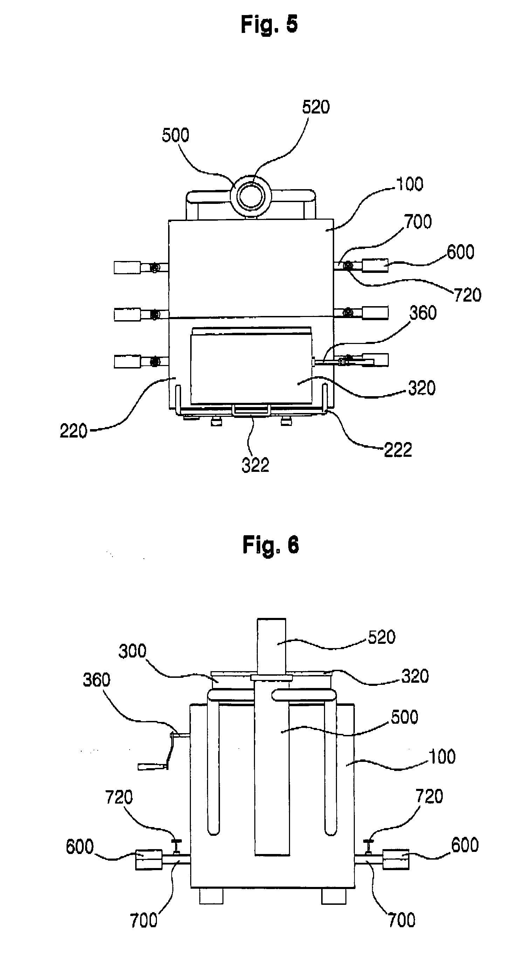

Figure 3 is a perspective view illustrating an organic material decomposition and treatment apparatus using a magnetic force according to another embodiment of the present invention. Figure 4 is a perspective view illustrating an inner construction of a second inlet of an organic material decomposition and treatment apparatus using a magnetic force of Figure 3. Figure 5 is a plane view illustrating an organic material decomposition and treatment apparatus using a magnetic force of Figure 3. Figure 6 is a rear view illustrating an organic material decomposition and treatment apparatus using a magnetic force of Figure 3.

As shown in Figures 3 and 4, the organic material decomposition and treatment apparatus using a magnetic force according to the present invention further comprises a second inlet 300 protruded from the first inlet 200 as compared to the previous embodiment of the present invention. A certain size opening is formed at the center portion of the lid 220 of the first inlet 200, the second inlet 300 being protruded over the opening. The second inlet 300 has a lid 320 like the first inlet 200 for thereby being opened and closed. In the lid 320, one side of the same is hinged (not shown) at the back surface of the second inlet 300, and the other side of the same is engaged at a front side of the second inlet 300 by a locking apparatus (not shown). The lid 320 of the second inlet 300 has a certain size larger than that of the second inlet 300 like the lid 220 of the first inlet 200, with a protrusion 224 being inserted into an opened inner side of the second inlet 300 and being formed at the lower surface of the same. With the above construction, the body 100 is reliably sealed. A handle 322 is installed at an outer side of the lid 320 so that the lid 320 is easily opened and closed.

A second inner casing 340 is installed in the interior of the second inlet 300 for storing an organic material therein. The second inner casing 340 has an arc side surface and is closely contacted with the inner surface of the second inlet 300. The second inner casing 340 is rotatably installed so that an organic material is inputted into the interior of the body 100, The above construction is implemented by a rotation lever 360. The rotation lever 360 passes through the second inlet 300. The second inner casing 340 is integrally engaged at the rotation lever 360 in the interior of the second inlet 300. When the rotation lever 360 rotates, the second inner casing 340 rotates as well, A handle is installed at an end of the rotation lever 360 for an easier rotation.

The second inlet 300 is installed on the first inlet 200, and the rotatable second inner casing 340 is installed in the interior of the second inlet 300, so that it is possible to minimize the input of external air which is inputted into the interior of the body 100 when the organic material is inputted. When it is needed to continuously input the organic material while the organic material is being decomposed, an external air is not inputted into the body 100 since the second inner casing 340 installed in the interior of the second inlet 300 is closely contacted with the inner surface of the second inlet 300 even when the second inlet 300 is opened. At this time, the organic material is inputted into the second inner casing 340, and the second inlet 300 is closed, so that the inputted organic material is inputted into the interior of the body 100 by rotating the second inner casing 340. So, it is possible to Input the organic material into the interior of the body 100 with a minimized input of external air.

As shown in Figures 1 through 4, the discharge port 400 is formed at a front side of the body 100. Preferably, it is formed at a front lower side of the body 100, A lid 420 is installed at the discharge port 400 like the first inlet 200 and is opened and closed. In the lid 420, one side of the same is hinged (120) at a front side of the body, and the other side of the same is engaged using the locking apparatus 130, The lid 420 has a certain size larger than that of the discharge port 400 so that the discharge port 400 is reliably sealed. A protrusion (not shown) is inserted into an opened inner surface of the discharge port 400.

As shown in Figures 1 through 6, the exhaust pipe 500 is installed at a back surface of the body 100, so that a gas generated during the decomposition of the organic material is discharged to the outside through the exhaust pipe 500. A filter 520 Is Installed at an outer side of the exhaust pipe 500 for thereby making the gas non-harmful and removing smell. The exhaust pipe 500 may be formed in a tube shape. More preferably, as shown in Figure 5, the exhaust pipe 500 may include a main exhaust pipe which is directly connected with a back surface of the body 100 and an auxiliary exhaust pipe of which one side is connected with a back surface of the body 100 and the other side is connected with the main exhaust pipe for an efficient discharge of gas.

As shown in Figures 1 through 6, a magnetic force generator 600 is installed at both sides of the body 100. Preferably, the magnetic force generators 600 are installed opposite to each other at the lower sides of both sides of the body 100. Namely, the magnetic force generators 600 are installed opposite to each other at one lower side of the body 100 and the other lower side of the same in such a manner that the N-pole and the S-pole are opposite to each other for thereby generating magnetic force in the interior of the body 100.

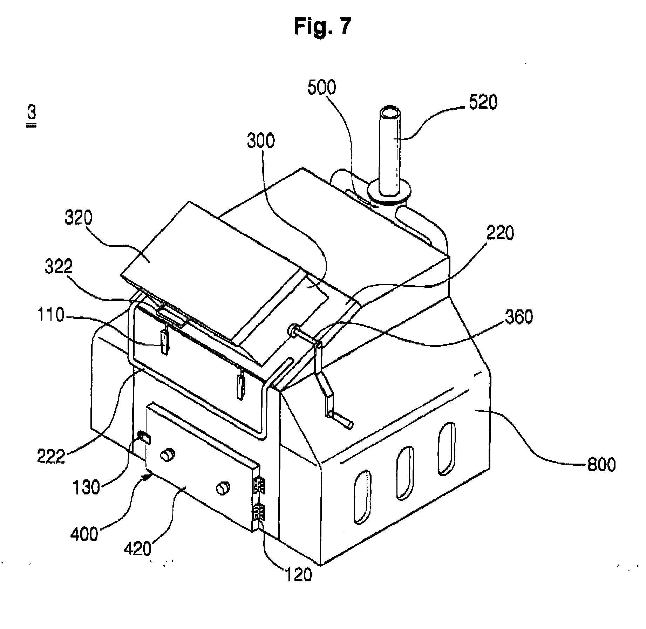

Figure 7 is a perspective view illustrating an organic material decomposition and treatment apparatus using a magnetic force according to further another embodiment of the present invention.

As shown in Figure 7, the organic material decomposition and treatment apparatus 3 using a magnetic force according to the present invention comprises a protection cover 800 at both sides of the body 100 for covering the magnetic force generator 600. So, it is possible to prevent an external discharge of magnetic force for thereby protecting the user of

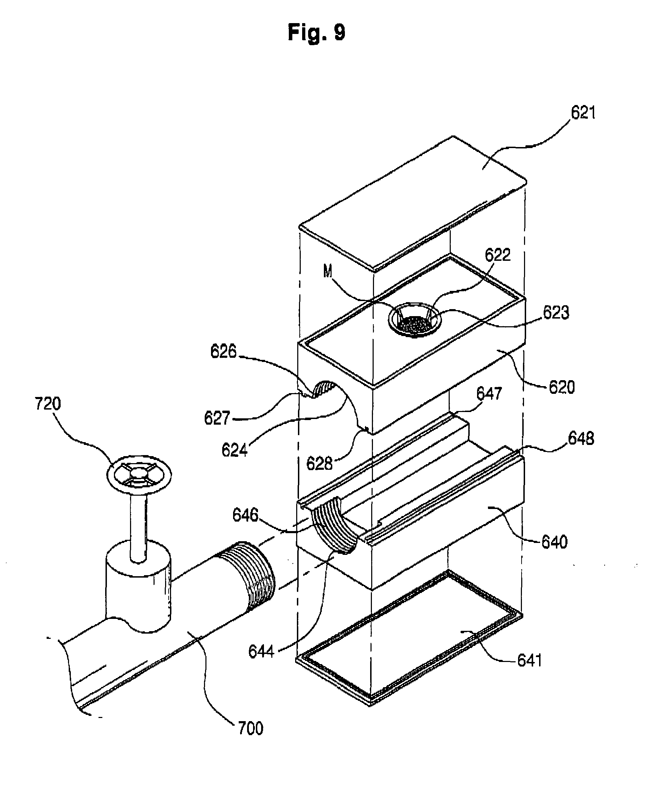

Figure 8 is a perspective view illustrating a magnetic force generator of an organic material decomposition and treatment apparatus using a magnetic force according to the present invention. Figure 9 is a disassembled view illustrating a magnetic force generator of Figure 8. Figure 10 is a cross sectional view taken along line A-A' of Figure 8

As shown in Figures 8 and 9, a magnetic force guide pipe 700 is installed between the body 100 and the magnetic force generator 600. Here, the magnetic force guide pipe 700 allows the magnetic force generated by the magnetic force generator 600 to be guided toward the body 100. The magnetic force guide pipe 700 engaged at one side of the magnetic force generator 600 passes through both lower sides of the body 100, so that the magnetic force generated by the magnetic force generator 600 is guided toward the interior of the body 100 through the magnetic force guide pipe 700. A magnetic force intensity control valve 720 is installed at the magnetic force guide pipe 700 for controlling the intensity of the magnetic force applied toward the interior of the body 100.

As shown in Figures 9 and 10, the magnetic force generator 600 comprises an upper casing 620 and a lower casing 640. The upper casing 620 and the lower casing 640 are made of a plastic material or a rubber material. Semicircular openings 624 and 644 having threaded grooves 626 and 646 ate formed at one side of each casing. Magnet receiving parts 622 and 642 are formed at the center portions of the same for receiving magnets M. A plurality of fixing members 623 and 643 are preferably provided at the inner sides of the magnet receiving parts 622 and 642 of the upper casing 620 and the lower casing 640 for fixing the magnets. In the present invention, the magnets M are neodymium permanent magnets. The magnet receiving parts 622 and 824 may be formed in circular shapes for stably receiving the magnets M therein. The shapes of the magnet receiving parts may be limited to the above shapes. They may be preferably formed in rectangular shapes or other shapes. One magnet M may be received in each magnet receiving parts 622 and 642 of the upper and lower casings 620 and 640. As shown in Figure 10, two magnets may be provided in one magnetic force generator 600. The upper and lower casings 620 and 640 have rectangular protrusions 827 and 648 and grooves 628 and 647, so that they are engaged with each other. So, a circular opening having a threaded groove is formed at one side of the magnetic force generator 600. A magnetic force guide pipe 700 Is thread-engaged with the opening. The upper and lower casings 620 and 640 are opened and closed by the lids 621 and 641 having protrusions.

Two or ten magnetic force generators 600 may be provided at the body 100. The magnet M is made of a neodymium permanent magnet having an intensity of 5000 through 7000 Gauss, which magnet is not limited thereto. The number of the magnetic force generators 600 is determined based on the kinds of the organic material to be treated or the size (volume) of the body 100, For example, in the case that the volume is 0.5m³, two magnetic force generators are respectively installed at both sides of the body, namely, four magnetic force generators (eight magnets) are totally installed. In the case that the volume is 1,0m³, three magnetic force generators are respectively installed at both sides of the body, namely, six magnetic force generators (twelve magnets) are totally installed, In the case that the volume is 1.5m³, five magnetic force generators are respectively installed at both sides of the body, namely, ten magnetic force generators (twenty magnets) are totally installed. The bigger the volume, the more number the magnetic force generators, The body is installed to orient the south. Namely, the N-pole of the magnet orients the south, so that the magnets may produce the magnetic force more efficiently with the effects of the earth magnetic field.

Figures 11A through 11E are schematic views illustrating a use state of an organic material decomposition and treatment apparatus using a magnetic force of Figure 3. The operation of the organic material decomposition and treatment apparatus 2 according to the present invention will be described with reference to the above drawings.

As shown in Figures 11A and 11 B, the lid 220 of the first inlet 200 formed on the upper side of the body 100 Is opened, and the organic material is directly inputted into the interior of the body 100, the lid 220 of the first inlet 200 is closed. When the magnetic force intensity control valve 720 of the magnetic force guide pipe 700 installed at both sides of the body 100 is opened, the magnetic force generated by the magnetic force generator 600 is guided toward the interior of the body 100, so that the organic material is reacted with the magnetic force and is decomposed, and at the same time, the decomposition heat is generated. In other words, the movements of the magnetic waves occur owing to the magnetic force guided toward the interior of the body 100, so that the organic material starts decomposing. At the same time, the decomposition heat occurs. As the heat decomposition of the organic material is performed by the decomposition heat, a drying gas is produced. As the decomposition of the organic material is continuously performed by the decomposition heat, a carbonization is continuously performed. The gas generated during the decomposition is discharged to the outside through the exhaust pipe 500. The gas may be treated and made non-harmful by the filter 520 installed at the exhaust pipe 500, and the smell is removed as well. In the present invention, since the organic material is decomposed not by a burning method, a certain harmful gas is not generated.

As shown in Figures 11C through 11E, in the case that it is needed to decompose the organic material by continuously inputting during the decomposition of the same, the lid 320 of the second inlet 300 is opened, and the organic material is inputted into the second inner casing 340. Since the second inner casing 340 Is closely contacted with the inner surface of the second inlet 300, an external air is prevented from being inputted into the interior of the body 100, The lid 320 of the second inlet 300 is closed, and the rotation lever 360 installed at the second inlet 300 is rotated, and the second inner casing 340 engaged with the rotation lever 360 in the interior of the second inlet 300 is integrally rotated, so that the organic material stored in the second inner casing 340 is inputted into the interior of the body 100. At this time, when the rotation lever 360 is rotated at 180°, all of the organic material stored in the second inner casing 340 is inputted into the interior of the body. When the rotation lever 360 Is rotated in the opposite direction, the second inner casing 340 goes to its original position. The next organic material is continuously stacked on the organic material which is previously inputted and decomposed.

When all of the organic material is decomposed through the above processes, the discharge port 400 of the body 100 is opened, and the remnants are removed. The remnants produced after the decomposition is minimized by a few hundreds times compared to the first size before the decomposition in their volumes, so that the remnants may be easily processed. As the organic materials which may be decomposed by the organic material decomposition and treatment apparatus according to the present invention, there are nylon, plastic, vinyl chloride, urethane material, petroleum chemical products, paper, wood, rubber, etc.

Figure 12 is a rear view illustrating an organic material decomposition and treatment apparatus using a magnetic force according to further another embodiment of the present invention. Figure 13 is a lateral view illustrating an organic material decomposition and treatment apparatus using a magnetic force of Figure 12. Figure 14 is a plane view illustrating an organic material decomposition and treatment apparatus using a magnetic force of Figure 12. Figure 15 is a disassembled view illustrating a smoke discharge port of an organic material decomposition and treatment apparatus using a magnetic force of Figure 12.

As shown In Figures 12 through 14, the organic material decomposition and treatment apparatus 4 using a magnetic force according to the present invention comprises a body 100, a first inlet, a first inner-casing, a discharge port, a dust collection unit 900, and a magnetic force generator. In this embodiment of the present invention, a second inlet and a second inner casing are further provided as compared to the previous embodiment of the present invention.

Since the construction and operations of the body, the first inlet, the first inner casing, the discharge port, the second inlet, the second inner casing and the magnetic force generator are the same as the first embodiment of the present invention, the descriptions of the same will be omitted,

The dust collection unit 900 comprises a dust collection casing 910, a smoke suction port 920, a smoke discharge port 930, a water tank 940, a water pump 950 and a water spraying port 960.

Here, the dust collection casing 910 Is attached on a back surface of the body 100 and is preferably made of a steel plate. Since the dust collection casing 910 is integrally attached to the body 100, it is possible to achieve a heat keeping effect by using the heat generated during the decomposition of the organic material in the interior of the body 100, so that a water-freezing phenomenon is prevented in the winter.

The smoke suction port 920 passes through the attachment surfaces of the body 100 and the dust collection casing 910. The smoke generated during the decomposition of the organic material in the interior of the body 100 moves toward the dust collection casing 910 through the smoke suction port 920.

The smoke discharge port 930 is attached to the dust collection casing 910 and is formed in a cylindrical shape. As shown in Figure 15, the smoke discharge port 930 is formed of a first smoke discharge port 932 and a second smoke discharge port 934. Here, the first smoke discharge port 932 is inserted into the interior of the dust collection casing 910, and one side of the second smoke discharge port 934 is joined an end of the first smoke discharge port 932, and the other side of the same is externally protruded from the dust collection casing 910. The smoke moved toward the dust collection casing 910 through the smoke suction port 920 in the interior of the body 100 is discharged to the outside through the smoke discharge port 930 in the dust collection casing 910. At this time, the smoke is inputted through the first smoke discharge port 932 and is discharged to the second smoke discharge port 934. The first smoke discharge port 932 is engaged with the second smoke discharge port 934 and is installed a vertical shape and Is bent in the direction that the water spraying port 960 is installed at a certain height. An end of the first smoke discharge port 932 has a larger diameter than the other portion for easily sucking smoke.

The water tank 940 is attached to an outer side of the dust collection casing 910. An openable inlet 942 is installed at an upper side of the water tank 940 for inputting water. A drainage port 944 is installed at a lower side of the same.

The water pump 950 is installed at one lower side of the dust collection casing 910 and Is connected with the water tank 940 through a connection pipe 952, so that water is inputted from the water tank 940 into the water pump 950. A pipe shaped water spraying port 960 is protruded from the upper side of the same.

The water spraying port 960 is vertically protruded from the upper side of the water pump 950 and is bent at a certain height and has an end which passes through one side surface of the dust collection casing 910 and is inserted into the interior. Here, the water spraying port 960 is installed opposite to the end of the first smoke discharge port 932. The water spraying port 960 is preferably formed at the same height as the height of the end of the first smoke discharge port 932, so that it is possible to minimize the amount of smoke discharged to the outside, When water is sprayed from the water spraying port 960, a minus pressure difference occurs between the body 100 and the dust collection casing 910, the minus pressure difference allows a magnetization air circulation speed to be accelerated from the outside to the inner side or from the inner side to the outside, so that the efficiency of the organic material decomposition and treatment of the body 100 is enhanced, and the smoke may be made non-harmful. The water pump 950 may be directly attached to the water tank 940. In this case, the water spraying port 960 is protruded from the water tank 950 in the horizontal direction, with an end of the same being bent at a certain length and passing through one lateral side of the dust collection casing 910 and being inserted into the interior.

An opening 946 is formed at the attachment surfaces of the dust collection casing 910 and the water tank 940 for a water circulation. So, the smoke is liquefied by the water sprayed through the water spray port 960, and the water moves back to the water tank through the opening 946 and is sucked Into the water pump 950 and is sprayed through the water spray port 960, so that a desired circulation is performed. Here, the filter 948 is preferably installed at the opening 946. With the above construction, it is possible to prevent the water tank 940, the connection pipe 952 of the water pump 950 and the water spray port 960 from being blocked. The wastes filtered by the filter 948 are removed from the filter 948 and are discarded.

The drainage port 944 is installed at a lower side of the water tank 940. When the treatment of the smoke is finished by the circulating water, the drainage port 944 is opened, and the water is discharged to the outside.

The operations of the organic material decomposition and treatment apparatus using a magnetic force according to the present invention will be described.

The organic material is inputted into the interior of the body 100, and the magnetic force intensity control valve 720 of the magnetic force generator 600 is opened, so that magnetic force Is generated toward the interior of the body 100 for thereby decomposing the organic material. At this time, decomposition heat is generated, and the organic material is carbonized by the decomposition heat. So, smoke is generated. In particular, when the inner temperature of the body 100 Increases up to above 300°C, the organic material becomes a smoldering state. At the same time, a large amount of smoke is produced. The produced smoke moves toward the dust collection casing 910 through the smoke suction port 920 and is discharged to the outside through the smoke discharge port 930. At this time, when the water pump 950 is operated, water is inputted from the water tank 940 to the water pump 950, and water is sprayed with respect to the first smoke discharge port 932 through the water spray port 960. The smoke is liquefied by the spraying water. The water produced by liquefying smoke moves toward the water tank 940 through the filter 948 and moves through the water pump 950 and is sprayed through the water spray port 960 for thereby defining a certain cycle, so that it is possible to continuously spray water. Almost smoke is liquefied by water owing to the spray of circulation water, so that a very small amount of smoke is discharged to the outside. Only non-harmful and no-smell smoke is discharged to the outside.

Water Is sprayed through the water spray port 960 of the water pump 950, a certain minus pressure difference occurs between the dust collection casing 910 and the body 100. The minus pressure difference allows a magnetization air circulation speed to be accelerated from the outside to the inner side or from the inner side to the outside, and the efficiency of the organic material decomposition and treatment of the body 100 is enhanced.

As described above, the organic material decomposition and treatment apparatus using a magnetic force according to the present invention has the following advantages.

First, since the organic materials are decomposed by a magnetic force in a sealed state with not air, not by a burning method, a harmful material such as dioxin or CO₂ does not occur. The organic materials are treated with no pollution.

Second, since the organic material is continuously decomposed and treated by the decomposition heat which produces during the decomposition of the organic material, a motor or a burner is not needed, so that the total cost decreases.

Third, since the inlet is formed in a dual structure, it is possible to continuously input the organic material with constant amounts in a state that an input of an external air is prevented.

Fourth, since the remnants collected after the decomposition of the organic material decrease by 1/300 through 1/200 as compared to the actual volume, the treatment work is easy. The remnants may be used for quality fertilizer or soil improving materials.

Fifth, since smoke generated during the decomposition and treatment of the organic material is liquefied by directly spraying water, it is possible to prevent the smoke from being discharged to the outside. The gas is processed with non-harmful method, and bad smell is removed.

Sixth, a minus pressure difference occurs between the body and the dust collection casing during the treatment of smoke by spraying water, the efficiency of the decomposition and treatment of the organic material is enhanced.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. An organic material decomposition and treatment apparatus using a magnetic force, comprising:
a body;
a first inlet which is formed at one upper side of the body and has a lid which is opened and closed;
a discharge port which is formed at a front side of the body and has a lid which is opened and closed;
an exhaust pipe which is installed at a back surface of the body; and
magnetic force generators which are installed opposite to each other at one side and the other side of the body, whereby the organic material is decomposed and treated by magnetic forces which are generated from the magnetic force generator and are guided toward the interior of the body.

2. The apparatus of claim 1, further comprising a first inner casing which is installed in the interior of the body stores the organic material.

3. The apparatus of claim 1, further comprising a second inlet which is protruded over a certain size opening formed at the lid of the first inlet and has a lid which is installed at an upper side and is opened and closed, and a second inner casing which is rotatably installed in the interior of the second inlet, whereby the organic material is stored in the second inner casing, and as the second inner casing is rotated, the organic material is inputted into the interior of the body.

4. The apparatus of claim 3, wherein said second inner casing has an arc side surface and is fixedly engaged with a rotation lever which passes through the lateral side of the second inlet.

5. The apparatus of claim 1, wherein a filter is installed at an outer side of the exhaust pipe.

6. The apparatus of one of claims 1 through 5, further comprising a magnetic force guide pipe installed between the body and the magnetic force generator, and a magnetic force generated by the magnetic force generator is guided toward the interior of the body through the magnetic force guide pipe, and a magnetic force intensity control valve is installed at the magnetic force guide pipe.

7. The apparatus of claim 6, wherein said magnetic force generator comprises an upper casing and a lower casing which are engaged with each other, and a magnet receiving part is formed at a center portion of each upper and lower casings, and a semicircular opening having a threaded groove Is formed at one side of the same, and the magnetic force guide pipe is thread-engaged with the opening.

8. The apparatus of claim 7, further comprising a protection cover which is installed at both outer sides of the body so that the magnetic force generated by the magnetic force generator is prevented from being discharged to the outside.

9. An organic material decomposition and treatment apparatus using a magnetic force, comprising:
a body;
a first inlet which is formed at one upper side of the body and has a lid which is opened and closed;
a first inner casing which is installed in the interior of the body for storing an organic material;
a discharge port which is formed at a front side of the body has a lid which is opened and closed;
a dust collection unit which is installed at a back surface of the body; and
magnetic force generators which are installed opposite to each other at one side and the other side of the body, whereby the organic material is decomposed and treated by magnetic forces which are generated from the magnetic force generator and are guided toward the interior of the body.

10. The apparatus of claim 9, wherein said dust collection unit comprises:
a dust collection casing which is attached to a back surface of the body;
a smoke suction port which passes through the attachment surfaces of the body and the dust collection casing;
a smoke discharge port which is engaged at the dust collection casing;
a water tank which is attached to an outer side of the dust collection casing:
a water pump which is attached at a lower side of the dust collection casing and is connected with the water tank through a connection pipe; and
a water spray port which is protruded from an upper side of the water pump and has an end which passes through one side surface of the dust collection casing and is inserted into the interior, whereby the smoke occurring during the decomposition of the organic material in the interior of the body is inputted into the dust collection casing through the smoke suction port and is liquefied by water sprayed by the water spray port,

11. The apparatus of claim 10, wherein said smoke discharge port comprises a first smoke discharge port which is inserted into the interior of the dust collection casing, and a second smoke discharge port of which one side is joined the first smoke discharge port and the other side is externally protruded from the dust collection casing.

12. The apparatus of claim 11, wherein an end of the first smoke discharge port and the water spray port are opposite to each other at the same heights.

13. The apparatus of claim 10, wherein a certain size opening is formed at the attachment surfaces of the dust collection casing and the water tank for allowing water to flow, and a filter is installed at the opening.

14. The apparatus of claim 10, wherein an inlet is installed at an upper side of the water tank, and a drainage port is installed at the lower side of the same.
